(19) Europäisches Patentamt
European Patent Office
Office européen des brevets

(11) EP 3 249 734 A1

(12) **EUROPEAN PATENT APPLICATION**

(43) Date of publication:
**29.11.2017 Bulletin 2017/48**

(51) Int Cl.:
**H01M 10/0525** (2010.01)   **H01M 4/131** (2010.01)
**H01M 2/14** (2006.01)   **H01M 2/16** (2006.01)
**H01M 10/42** (2006.01)

(21) Application number: **17172378.6**

(22) Date of filing: **23.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.05.2016 JP 2016102477**

(71) Applicant: **Automotive Energy Supply
Corporation
Zama-shi, Kanagawa 252-0012 (JP)**

(72) Inventors:
• **Suguro, Masahiro
Kanagawa, 252-0012 (JP)**
• **Kaneko, Shinako
Kanagawa, 252-0012 (JP)**

(74) Representative: **Herzog, Fiesser & Partner
Patentanwälte PartG mbB
Isartorplatz 1
80331 München (DE)**

(54) **LITHIUM ION SECONDARY BATTERY**

(57)   Provided is a lithium ion secondary battery including: a package; and a power generating element disposed in the package, the power generating element including: a positive electrode; a negative electrode; a separator; and an electrolyte solution, and the separator having a shrinkage rate of 10% or less at 150°C obtained by a thermomechanical analysis.

## FIGURE

**Description**

CROSS-REFERENCE TO RELATED APPLICATION

This application claims priority from Japanese Patent Application No. 2016-102477 filed with the Japan Patent Office on May 23, 2016, the entire content of which is hereby incorporated by reference.

BACKGROUND

1. Technical Field

The present disclosure relates to a lithium ion secondary battery.

2. Related Art

Nonaqueous electrolyte batteries have been practically used as batteries for vehicles including hybrid vehicles, electric vehicles, and the like. As such batteries used for the on-vehicle power source, lithium ion secondary batteries are used. As the development of the lithium ion secondary batteries has advanced, the batteries have come to have higher output. Along with this, it is necessary to ensure the safety.

When the lithium ion secondary battery is broken in the occurrence of nail penetration, crushing, or the like, the battery may generate heat because of the internal short-circuiting. In order to prevent such heat generation, various methods have been suggested in regard to, for example, the improvement of the battery members including the electrode material, the electrolyte solution, the separator, and the like and the installation of a safety circuit.

In order to provide the polyolefin multilayer microporous film with the well-balanced shut-down characteristic, melt-down characteristic, permeability, and penetrating strength, JP-A-2013-35293 has disclosed the multilayer microporous film including the first porous layer containing the polyethylene resin and the second porous layer containing the polyethylene resin and having a melt-down temperature of more than or equal to a particular temperature. Moreover, WO2007-72596 has disclosed to dispose the heat-resistant insulating layer between the positive electrode and the negative electrode, and together with the separator interposed therebetween, the positive electrode and the negative electrode are wound.

SUMMARY

A lithium ion secondary battery according to an embodiment of the present disclosure includes: a package; and a power generating element disposed in the package, the power generating element includes: a positive electrode; a negative electrode; a separator; and an electrolyte solution, and the separator has a shrinkage rate of 10% or less at 150°C obtained by a thermomechanical analysis.

BRIEF DESCRIPTION OF THE DRAWINGS

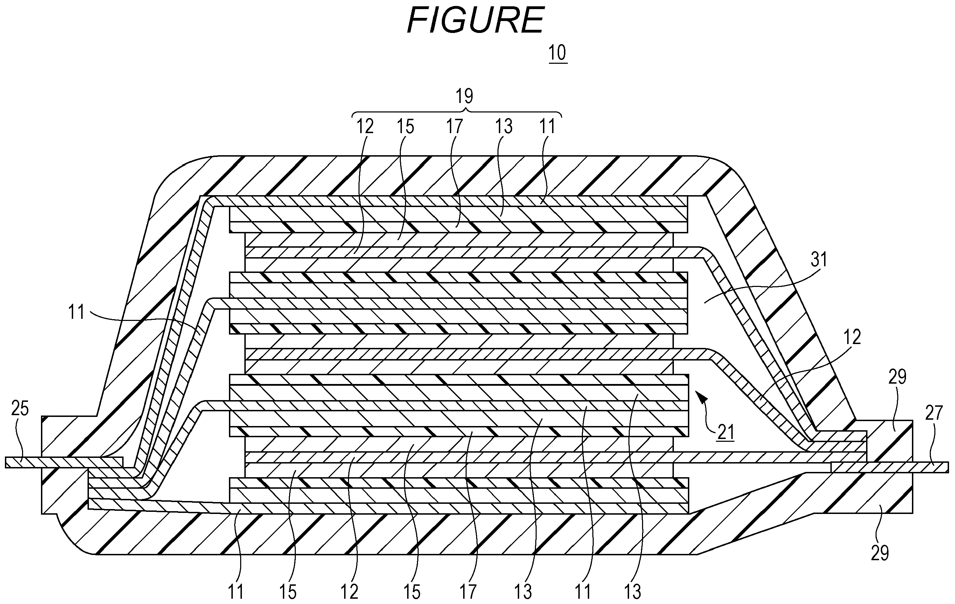

Fig. 1 is a schematic cross-sectional view of a lithium ion secondary battery according to one embodiment of the present disclosure.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The multilayer microporous film disclosed in JP-A-2013-35293 has the high melt-down temperature. However, if the inside of the battery has the temperature over this melt-down temperature in the occurrence of internal short-circuiting in the battery, the multilayer microporous film may be cut due to the melting. Moreover, in regard to the battery disclosed in WO2007-72596, if the temperature in the battery has increased in the occurrence of the internal short-circuiting, the damage of the separator is inevitable. In view of the above, the present disclosure provides a lithium ion secondary battery that can maintain the safety by making it difficult for the damage of the separator to occur in the short-circuiting and effectively suppressing the heat generation.

A lithium ion secondary battery of the embodiment includes: a package; and a power generating element disposed in the package, and the power generating element includes: a positive electrode; a negative electrode; a separator; and an electrolyte solution. Here, the separator has a shrinkage rate of 10% or less at 150°C obtained by a thermomechanical analysis.

In the lithium ion secondary battery according to the present embodiment, the damage of the separator in the short-circuiting does not occur easily. Therefore, the increase in temperature of the battery due to that damage can be suppressed. This eliminates the necessity of decreasing the output of the battery to avoid the heat generation in the short-circuiting. As a result, the high-output battery with the high safety can be provided.

An embodiment of the present disclosure will hereinafter be described. In the present embodiment, the positive electrode is a battery member with a shape like a thin plate or a sheet, having a positive electrode active material layer. This positive electrode active material layer is formed by applying or rolling, and drying a mixture of a positive electrode active material, a binder, and if necessary, a conductive agent on a positive electrode current collector such as a metal foil. The negative electrode is a battery member with a shape like a thin plate or a sheet, having a negative electrode active material layer. This negative electrode active material layer is formed by applying a mixture of a negative electrode active material, a binder, and if necessary, a conductive agent on a negative electrode current collector. The separator is a film-shaped battery member for securing the conductivity of lithium ions between the negative electrode and the positive electrode while separating the positive electrode and the negative electrode from each other. The electrolyte solution refers to the solution with electric conductivity, which is obtained by dissolving the ionic substance in a solvent. In the present embodiment, in particular, a nonaqueous electrolyte solution can be used. A power generating element including the positive electrode, the negative electrode, the separator, and the electrolyte solution constitutes one unit of the main constituent members of the battery. The positive electrode and the negative electrode are usually overlapped (stacked) on each other with the separator interposed therebetween. Then, this stack is immersed in the electrolyte solution.

The package of the lithium ion secondary battery according to the present embodiment includes the power generating element. Preferably, the power generating element is sealed in the package. The sealing means that the power generating element is covered with the package material so that the power generating element is not exposed to the external air. That is to say, the package has a bag-like shape that can seal the power generating element inside.

The positive electrode of the lithium ion secondary battery according to the present embodiment is a battery member with a shape like a thin plate or a sheet having the positive electrode active material layer. This positive electrode active material layer is formed by applying or rolling, and drying a mixture of a positive electrode active material, a binder, and if necessary, a conductive agent on a positive electrode current collector such as a metal foil. The metal foil is preferably an aluminum foil. The positive electrode active material layer preferably contains lithium nickel composite oxide as the positive electrode active material. The lithium nickel composite oxide is transitional metal composite oxide containing lithium and nickel. This composite oxide is represented by the general formula $Li_xNi_yMe_{(1-y)}O_2$. Here, Me is one or more kinds of metals selected from the group consisting of Al, Mn, Na, Fe, Co, Cr, Cu, Zn, Ca, K, Mg, and Pb.

The positive electrode active material layer may further contain lithium manganese composite oxide as the positive electrode active material. Examples of the lithium manganese composite oxide include lithium manganate ($LiMnO_2$ with a zig-zag-layered structure and spinel type lithium manganate ($LiMn_2O_4$). By using the lithium manganese composite oxide additionally, the positive electrode can be fabricated at lower cost. It is particularly preferable to use the spinel type lithium manganate ($LiMn_2O_4$) because of having the excellent stability of the crystal structure in the overcharged state.

It is particularly preferable that the positive electrode active material layer contains lithium nickel manganese cobalt composite oxide with a layered crystal structure represented by the general formula $Li_xNi_yCo_zMn_{(1-y-z)}O2$. Here, x in the general formula is a positive number satisfying the relation of $1 \leq x \leq 1.2$. In addition, y and z are positive numbers satisfying $y + z < 1$, and y is 0.5 or less. As more manganese is contained, it becomes more difficult to form the composite oxide with a single phase. Therefore, desirably, the relation of $1 - y - z \leq 0.4$ is satisfied. Moreover, as more cobalt is contained, the cost will increase and the capacity will decrease. Therefore, desirably, the relations of $z < y$ and $z < 1 - y - z$ are satisfied. In order to obtain the high-capacity battery, it is particularly preferable that the relations of $y > 1 - y - z$ and $y > z$ and are satisfied.

Examples of the conductive agent used if necessary for the positive electrode active material layer include carbon materials including carbon fiber such as carbon nanofiber, carbon black such as acetylene black and Ketjen black, activated carbon, graphite, mesoporous carbon, fullerenes, and carbon nanotube. In addition, the positive electrode active material layer may contain an electrode additive generally used for forming the electrode, such as thickener, dispersant, and stabilizer.

Examples of the binder used for the positive electrode active material layer include: fluorine resins such as polyvinylidene fluoride (PVDF), polytetrafluoroethylene (PTFE), and polyvinyl fluoride (PVF); conductive polymers such as polyanilines, polythiophenes, polyacetylenes, and polypyrroles; synthetic rubber such as styrene butadiene rubber (SBR), butadiene rubber (BR), chloroprene rubber (CR), isoprene rubber (IR), and acrylonitrile butadiene rubber (NBR); and polysaccharides such as carboxymethyl cellulose (CMC), xanthan gum, guar gum, and pectin.

In this embodiment, the positive electrode active material layer can be formed by the following method. First, lithium composite oxide as the positive electrode active material, a binder, and a conductive agent are mixed in an appropriate proportion in a solvent (such as N-methylpyrrolidone (NMP), water, or the like); thus, slurry is formed. Next, this slurry is applied or rolled on a positive electrode current collector including a metal foil (such as an aluminum foil). The solvent is evaporated by the heating.

In the lithium ion secondary battery according to the present embodiment, the negative electrode is a battery member with a shape like a thin plate or a sheet, having the negative electrode active material layer. This negative electrode active material layer is formed by applying or rolling, and drying a mixture of a negative electrode active material, a binder, and if necessary, a conductive agent on a negative electrode current collector such as a metal foil. The metal foil is preferably a copper foil. The negative electrode active material is preferably a carbon material.

In each embodiment, the carbon material contains graphite. In particular, containing graphite in the negative electrode active material layer makes it possible to improve the output of the battery even when the state of charge (SOC) of the battery is low. Graphite is the hexagonal crystal carbon material having the hexagonal-plate-like crystal structure. This carbon material is sometimes referred to as black lead or graphite. The shape of the graphite is preferably like a particle.

Graphite includes natural graphite and artificial graphite. Natural graphite is inexpensive and can be obtained in large quantity. Since the graphite has the stable structure, the graphite has the excellent durability. Artificial graphite is the graphite produced artificially. Since the artificial graphite has high purity (the impurities such as allotropes are hardly contained), the artificial graphite has the low electric resistance. Either the natural graphite or the artificial graphite can be used suitably as the carbon material in the present embodiment. Either the natural graphite covered with amorphous carbon or the artificial graphite covered with amorphous carbon can be used.

Note that amorphous carbon is the carbon material with a structure including microcrystals forming the network randomly and is amorphous as a whole. Amorphous carbon may have a structure similar to graphite partially. Examples of the amorphous carbon include carbon black, coke, activated carbon, carbon fiber, hard carbon, soft carbon, and mesoporous carbon. When the natural graphite particle covered with amorphous carbon or the artificial graphite covered with amorphous carbon is used for the carbon material of the negative electrode active material, the decomposition of the electrolyte solution is suppressed. In addition, the negative electrode has the higher durability.

When the artificial graphite is used, preferably, the artificial graphite with an interlayer distance d value ($d_{002}$) of 0.337 nm or more is used. The structure of the crystal of the artificial graphite is generally thinner than that of the natural graphite. Artificial graphite used as the negative electrode active material for the lithium ion secondary battery satisfies the condition that it has the interlayer distance at which the lithium ion can be intercalated. The interlayer distance at which the intercalation/deintercalation of lithium ions is possible can be estimated based on the d value ($d_{002}$). When the d value is 0.337 nm or more, the intercalation/deintercalation of lithium ions is possible without a problem.

The binder included in the negative electrode active material layer plays a role of attaching together the particles of the carbon material as the negative electrode active material and attaching between the negative electrode active material layer and the metal foil. For example, if PVDF is used as the binder, not water but N-methylpyrrolidone (NMP) can be used as the solvent. Therefore, the generation of gas due to the remaining moisture can be prevented. It is particularly preferable that the binder is contained in the range of 4 to 7 wt% based on the weight of the entire negative electrode active material layer. When the content of the binder is in the above range, the binding power of the negative electrode material can be secured and the resistance of the negative electrode can be maintained low. Examples of the binder that can be used other than PVDF include water-soluble binders including fluorine resins such as polytetrafluoroethylene (PTFE) and polyvinyl fluoride (PVF); conductive polymers such as polyanilines, polythiophenes, polyacetylenes, and polypyrroles; synthetic rubber such as styrene butadiene rubber (SBR), butadiene rubber (BR), chloroprene rubber (CR), isoprene rubber (IR), and acrylonitrile butadiene rubber (NBR); and polysaccharides such as carboxymethyl cellulose (CMC), xanthan gum, guar gum, and pectin.

The negative electrode active material layer may contain the conductive agent as necessary. Examples of the conductive agent include carbon materials including carbon fiber such as carbon nanofiber, carbon black such as acetylene black and Ketjen black, activated carbon, mesoporous carbon, fullerenes, and carbon nanotube. In addition, the negative electrode active material layer may contain an electrode additive generally used for forming the electrode, such as thickener, dispersant, and stabilizer.

In this embodiment, the negative electrode active material layer can be formed by the following method. First, the carbon material as the negative electrode active material, the binder, and the conductive agent are mixed in an appropriate proportion in a solvent (such as N-methylpyrrolidone (NMP), water, or the like); thus, slurry is formed. Next, this slurry is applied or rolled on a negative electrode current collector including a metal foil (such as a copper foil). The solvent is evaporated by the heating.

In the lithium ion secondary battery according to the present embodiment, the separator is a film-shaped battery member for securing the conductivity of lithium ions between the negative electrode and the positive electrode while separating the positive electrode and the negative electrode from each other. The separator used in the present embodiment contains the olefin resin layer. The olefin resin layer contains polyolefin obtained by polymerizing or co-

polymerizing $\alpha$-olefin such as ethylene, propylene, butene, pentene, or hexene. In the present embodiment, the olefin resin layer preferably contains polyolefin with a structure having pores closed when the battery temperature has increased, i.e., the porous or microporous polyolefin. When the olefin resin layer has such a structure, even if the battery temperature should increase, the separator is closed (shutdown) to block the ion flow. To achieve the shutdown effect, it is particularly preferable to use the porous polyethylene film.

In particular, throughout the present embodiment, the shrinkage rate of the separator at 150°C obtained by the thermomechanical analysis is preferably 10% or less. The thermomechanical analysis (TMA) is the method in which the deformation of the substance is obtained as the function of the temperature by applying the non-oscillatory load to the substance while the temperature of the substance is changed in accordance with the controlled program. In TMA, the dimensional change of the sample is measured. By changing the mode, the dynamic properties depending on the temperature, such as the thermal expansion, the thermal shrinkage, the glass transition, and the thermal history of the sample can be analyzed. The thermal shrinkage rate of the material including the separator and the like obtained by TMA is the value representing how the dimension changes (decreases) when the heat is applied to the film material. In the present embodiment, the value of the thermal shrinkage rate is obtained by the following method. First, the test piece of the film material is suspended in a thermostat tank of a thermomechanical analyzer. The temperature in the thermostat tank is increased from 20°C to 230°C, and in the middle of this temperature increase, the shrinkage rate of the area of the test piece when the temperature has reached 150°C is calculated by the following formula:

$$100 \times [(\text{area of test piece before test}) - (\text{area of test piece at } 150°C \text{ in TMA})]/(\text{area of test piece before test})$$

If the separator has a thermal shrinkage rate of more than 10% at 150°C, heat generated in the micro short-circuiting will break the film of the separator more widely, so that the melt down occurs. In this case, a large amount of current possibly flows to the battery. If the separator has a thermal shrinkage rate of 10% or less at 150°C, the separator will not melt down even by the heat generated in the short-circuiting of the battery. Therefore, the continuous heat generation of the battery can be suppressed.

Note that the separator may have a heat-resistant layer as necessary. The heat-resistant layer is preferably the heat-resistant particle layer obtained by depositing particles with heat resistance in the layer form on a surface of the resin contained in the separator. The heat-resistant layer to suppress the heat generation of the battery contains inorganic microparticles which have the heat resistance and are electrochemically stable. This inorganic particle resists the temperature of, for example, 150°C or more. Examples of such an inorganic microparticle include barium titanate; metal oxide such as silica, alumina ($\alpha$-alumina, ($\beta$-alumina, and $\theta$-alumina), iron oxide, titanium oxide, zirconium oxide; and minerals such as boehmite, zeolite, apatite, kaolin, spinel, mica, and mullite. The separator including the heat-resistant layer on the surface of the resin layer is generally referred to as a ceramic separator. The shrinkage rate of the ceramic separator obtained by TMA at 150°C is preferably 10% or less.

The ceramic separator has the olefin resin layer and the heat-resistant layer, and the heat-resistant layer is stacked on a surface of the olefin resin film. The heat-resistant layer can be formed on either one of or both the surfaces of the olefin resin film that are opposite to each other. The ratio of the thickness of the entire heat-resistant layer is in the range of 1/10 to 1/2, preferably 1/8 to 1/3 of the thickness of the olefin resin layer. When the heat-resistant layer has the too large thickness, the decomposed substance of the sulfur-containing additive included in the electrolyte solution may increase. When the heat-resistant layer has the too small thickness, the effect of improving the heat resistance of the separator cannot be expected.

In the lithium ion secondary battery according to the present embodiment, the electrolyte solution is a solution with the electric conductivity that is obtained by dissolving the ionic substance in the solvent. In the present embodiment, in particular, the nonaqueous electrolyte solution is used. The power generating element including the positive electrode, the negative electrode, the separator, and the electrolyte solution constitutes one unit of the main components of the battery. The positive electrode and the negative electrode are usually stacked on each other with the separator interposed therebetween. Then, this stack is immersed in the electrolyte solution.

The electrolyte solution used in the present embodiment is the nonaqueous electrolyte solution and is preferably the mixture containing: one or more linear carbonates selected from dimethyl carbonate (hereinafter referred to as "DMC"), diethyl carbonate (hereinafter referred to as "DEC"), ethylmethyl carbonate (hereinafter referred to as "EMC"), di-n-propyl carbonate, di-i-propyl carbonate, di-n-butyl carbonate, di-isobutyl carbonate, di-t-butyl carbonate, and the like; and one or more cyclic carbonates selected from propylene carbonate (PC), ethylene carbonate (hereinafter referred to as "EC"), and the like. The electrolyte solution is obtained by dissolving a lithium salt such as lithium hexafluorophosphate ($LiPF_6$), lithium tetrafluoroborate ($LiBF_4$), or lithium perchlorate ($LiClO_4$) in such a carbonate mixture.

For the electrolyte solution, PC and/or EC corresponding to the cyclic carbonate and DMC and/or EMC corresponding to the linear carbonate are used in combination as appropriate. PC is the solvent with the low coagulating point, and is used to improve the output when the battery has the low temperature. However, it is known that the compatibility of the PC to the graphite used as the negative electrode active material is a little low. EC is the solvent with the high polarity, i.e., the high dielectric constant. EC is used as the component of the electrolyte solution for the lithium ion secondary battery. However, EC has a high melting point (coagulating point) and is solid at room temperature. Therefore, even if the mixed solvent containing EC is prepared, the coagulation and the deposition may occur at low temperature. DMC is the solvent with the low viscosity and the high diffusion coefficient. However, DMC has the high melting point (coagulating point). Therefore, it may happen that the electrolyte solution is coagulated at low temperature. Like DMC, EMC is the solvent with the low viscosity and the high diffusion coefficient. In this manner, the components of the electrolyte solution have the different characteristics. For example, in order to improve the output when the battery has the low temperature, it is important to consider the balance between these components. By adjusting the ratio between the cyclic carbonate and the linear carbonate to be contained, the electrolyte solution having the low viscosity at room temperature and maintaining its property even at the low temperature can be obtained.

The electrolyte solution may contain the cyclic carbonate compound as the additive. Examples of the cyclic carbonate used as the additive include vinylene carbonate (hereinafter, "VC"). Another example of the additive is a cyclic carbonate compound with a halogen. These cyclic carbonates are the compounds that form a protective film for the positive electrode and the negative electrode in the process of charging and discharging the battery. In particular, the cyclic carbonates can prevent the sulfur-containing compound such as the disulfonic acid compound or the disulfonic acid ester compound from attacking the positive electrode active material containing the lithium nickel composite oxide. Examples of the cyclic carbonate compounds with a halogen include fluoroethylene carbonate (hereinafter "FEC"), difluoroethylene carbonate, trifluoroethylene carbonate, chloroethylene carbonate, dichloroethylene carbonate, and trichloroethylene carbonate. Particularly, fluoroethylene carbonate, a halogenated cyclic carbonate compound, is preferably employed.

The electrolyte solution may further contain a disulfonic acid compound as the additive. The disulfonic acid compound is a compound having two sulfo groups in one molecule. The disulfonic acid compound incorporates a disulfonate compound corresponding to a salt formed by the reaction between the sulfo group and the metal ion, and a disulfonic acid ester compound having the ester bond including the sulfo group. One or two of the sulfo groups of the disulfonic acid compound may react with the metal ion to form the salt or may be in the anion state. Examples of the disulfonic acid compound include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, salts thereof (such as lithium methanedisulfonate and lithium 1,3-ethanedisulfonate), and anions thereof (such as methanedisulfonic acid anion and 1,3-ethanedisulfonic acid anion). Other examples of the disulfonic acid compound include a disulfonic acid ester compound. Among these disulfonic acid esters, linear disulfonic acid esters of alkyl diester and aryl diester, such as methanedisulfonic acid, 1,2-ethanedisulfonic acid, 1,3-propanedisulfonic acid, 1,4-butanedisulfonic acid, benzenedisulfonic acid, naphthalenedisulfonic acid, and biphenyldisulfonic acid, and cyclic disulfonic acid esters such as methylene methanedisulfonate, ethylene methanedisulfonate, and propylene methanedisulfonate are preferably used. Methylene methanedisulfonate (hereinafter referred to as "MMDS") is particularly preferable.

Here, a structure example of the lithium ion secondary battery according to the present embodiment is described with reference to the drawing. Fig. 1 illustrates one example of the cross-sectional view of the lithium ion secondary battery. A lithium ion secondary battery 10 includes, as main components, negative electrode current collectors 11, negative electrode active material layers 13, separators 17, positive electrode current collectors 12, and positive electrode active material layers 15. In Fig. 1, the negative electrode active material layer 13 is disposed on each of opposite surfaces of the negative electrode current collectors 11. On each of the opposite surfaces of the positive electrode current collectors 12, the positive electrode active material layer 15 is disposed. Alternatively, the active material layer can be disposed on only one surface of each current collector. The negative electrode current collector 11, the positive electrode current collector 12, the negative electrode active material layer 13, the positive electrode active material layer 15, and the separator 17 constitute one battery unit, i.e., the power generating element (a unit cell 19 in the drawing). The separator 17 may include the heat-resistant microparticle layer and the olefin resin film (neither is shown). A plurality of such unit cells 19 is stacked with the separator 17 interposed therebetween. Extension portions extending from the negative electrode current collectors 11 are collected and bonded onto a negative electrode lead 25. Extension portions extending from the positive electrode current collectors 12 are collected and bonded onto a positive electrode lead 27. The positive electrode lead is preferably an aluminum plate and the negative electrode lead is preferably a copper plate. These leads may be partly coated with another metal (such as nickel, tin, or solder) or a polymer material. The positive electrode lead and the negative electrode lead are welded to the positive electrode and the negative electrode, respectively. The battery including the stacked unit cells is covered with a package 29 so that the welded negative electrode lead 25 and positive electrode lead 27 are led out of the battery. An electrolyte solution 31 is poured into the package 29. The package 29 has a shape obtained by heat-sealing the periphery of the two stacks. In Fig. 1, the negative electrode lead 25 is provided for one of opposite sides of the package 29 and the positive electrode lead 27 is provided for the other side (called "both-side tab type"). Alternatively, the negative electrode lead 25 and the positive electrode lead 27 may be disposed on one side of the package 29 (i.e., the negative electrode lead 25 and the positive electrode lead 27 may be led out of one side of the package 29, and this is called "one-side tab type").

The area of the positive electrode and the negative electrode used for the lithium ion secondary battery fabricated as above is preferably 75 cm$^2$ or more. The lithium ion secondary battery according to the present embodiment may be the laminated type battery as illustrated in Fig. 1. The electrode with a relatively large area is preferably used. The lithium ion secondary battery according to the present embodiment is suitably used as the on-vehicle power source.

[Examples]

<Fabrication of negative electrode>

As the negative electrode active material, the graphite powder with a BET specific surface area of 3.4 m$^2$/g was used. Carbon black powder (hereinafter "CB") with a BET specific surface area of 62 m$^2$/g as the conductive agent, and carboxymethyl cellulose (hereinafter "CMC") and styrene butadiene copolymer latex (hereinafter "SBR") as the binder resin were mixed in a solid content mass ratio of CB : CMC : SBR = 0.3 : 1.0 : 2.0. The obtained mixture was added to ion exchanged water and stirred; thus, slurry 1 was prepared. Next, this slurry 1 and 70 g of graphite powder were mixed so that the ratio between the solid and liquid became solid : liquid = 50 wt% : 50 wt%. The obtained mixture was dispersed uniformly in water by stirring, so that slurry 2 was prepared. The obtained slurry 2 was applied on a 10-$\mu$m-thick copper foil serving as the negative electrode current collector. This was heated at 125°C for 10 minutes to evaporate the water; thus, the negative electrode active material layer was formed. In addition, the negative electrode active material layer was pressed, so that the negative electrode with the negative electrode active material layer applied on one of the opposite surfaces of the negative electrode current collectors was fabricated.

<Fabrication of positive electrode>

As the positive electrode active material, lithium nickel cobalt manganese oxide (D50 particle diameter: 9 $\mu$m, NCM523, i.e., nickel: cobalt: manganese = 5 : 2 : 3, lithium/metal (except lithium) ratio =1.04, BET specific surface area: 22 m$^2$/g) was used. CB with a BET specific surface area of 62 m$^2$/g and graphite powder (hereinafter "GR") with a BET specific surface area of 22 m$^2$/g which correspond to the conductive agent, and PVDF (Kureha W#7200, Kureha Battery Materials Japan Co., Ltd.) which corresponds to the binder resin were added to N-methyl-pyrrolidone (hereinafter "NMP") as the solvent so that the solid content mass ratio was CB : GR : PVDF = 3 : 1 : 3. In this mixture, 180 g of NCM523 was added so that the ratio between the solid and the liquid became solid : liquid = 50 wt% : 50 wt%. Further, 0.03 parts by mass of oxalic acid anhydrous (molecular weight: 90) as the organic moisture scavenger was added to 100 parts by mass of solid content obtained by subtracting NMP from the mixture. After that, these materials were dispersed uniformly by stirring, so that slurry 3 was prepared. The obtained slurry 3 was applied on a 20-$\mu$m-thick aluminum foil serving as the positive electrode current collector. Next, the electrode was heated at 125°C for 10 minutes to evaporate NMP; thus, the positive electrode active material layer was formed. In addition, by pressing the positive electrode active material layer, the positive electrode with the positive electrode active material layer applied on one surface of the positive electrode current collector was fabricated.

<Separator>

The following four kinds of separators were prepared:

Example 1: A ceramic separator was fabricated approximately in accordance with a method disclosed in Example according to JP-A-2014-22051. Alumina with a particle diameter of 1 to 3 $\mu$m, an aqueous solution of ammonium polyacrylate as the dispersant, a binder dispersed in water (modified polybutyl acrylate), and a surfactant (anionic surfactant) were mixed in water, so that the alumina dispersed solution was prepared. Here, the mixing was performed so that the ratio among the alumina, the dispersant, and the binder was 70 : 10 : 20 and the concentration of the surfactant was 0.1 wt%. In this manner, slurry 4 was prepared. Next, on a surface of a three-layer microporous resin film (with a thickness of 18 $\mu$m and a porosity of 50%) in which polypropylene/polyethylene/polypropylene (PP/PE/PP) were stacked in this order, the slurry 4 was applied using a bar coater. By performing the drying at room temperature, the ceramic separator having the 4-$\mu$m-thick alumina layer on one of the opposite surfaces of the microporous resin films was obtained.

Example 2: the ceramic separator having the 4-$\mu$m-thick boehmite layer on one surface of the microporous resin film was obtained by the same method as that of Example 1 except that boehmite was used instead of the alumina.

Comparative Example 1: the separator including a single layer of PP (with a thickness of 25 $\mu$m) not containing the applied ceramic microparticles was used as the separator according to Comparative Example 1.

Comparative Example 2: the separator including three layers of PP/PE/PP (with a thickness of 18 $\mu$m) not containing the applied ceramic microparticles was used as the separator according to Comparative Example 2.

<Electrolyte solution>

By mixing EC, DMC, and EMC at a ratio of EC : DMC : EMC = 30 : 60 : 10 (volume ratio), the nonaqueous solvent was obtained. Into this nonaqueous solvent, lithium hexafluorophosphate (LiPF$_6$) as the electrolyte salt was dissolved so that the concentration thereof became 0.9 mol/L. To the obtained solution, MMDS, VC, and FEC as the additives were dissolved so that the total concentration thereof became 1 wt%; thus, the electrolyte solution was obtained.

<Fabrication of lithium ion secondary battery>

From each of the negative electrode plate and the positive electrode plate fabricated as above, rectangular members each having a predetermined size (area: 253 mm$^2$) were cut out. On a part of the rectangular member, where coating was not applied for connecting the terminal, a positive electrode lead terminal made of aluminum was welded with ultrasonic waves. The negative electrode plate and the positive electrode plate were disposed on both surfaces of the separator in a state that both active material layers are in contact with the separator; thus, the electrode stack was obtained. Except one long side of the two aluminum laminate films, the other three sides were attached through heat-sealing. Thus, a bag-shaped laminated film package was fabricated. Into the bag-shaped laminated film package, the electrode stack was inserted, the electrolyte solution was poured into the laminated film package, and then the electrode stack was immersed in the electrolyte solution in vacuum. Next, the opening was heat-sealed under reduced pressure. Thus, a so-called one-tab type stacked lithium ion battery was obtained. With this stacked type lithium ion battery, the initial charging-discharging was performed. After that, high-temperature aging was carried out several times. In this manner, the stacked type lithium ion battery with a battery capacity of 42 Ah was obtained.

<Initial charging and discharging>

The initial charging and discharging were performed at an atmosphere temperature of 55°C so that the residual capacity (hereinafter referred to as state of charge "SOC") varies in the range of 0% to 100%. The charging and discharging were performed under the condition below. First, the constant-current charging (CC charging) was performed at a current of 0.1 C up to 4.1 V, secondly the constant-voltage charging (CV charging) was performed at 4.1 V, and thirdly the constant-current discharging (CC discharging) was performed at a current of 0.1 C to 2.5 V.

<Measurement of SOC-OCV (state of charge-open circuit voltage)>

The stacked type lithium ion battery with a battery capacity of 42 Ah was charged with a constant current of 0.2 C until the SOC of the battery with a voltage of 3 V became 50%. The battery voltage after the battery was left for one hour in this state is defined as 50%-SOC-OCV (unit: V), i.e., as the value of the open circuit voltage of the battery with an SOC of 50%.

<Measurement of battery capacity>

The product of the value (unit: V) of the open circuit voltage (50%-SOC-OCV) and the value (unit: Ah) of the current when the CC charging with a current of 0.2 C was performed was defined as the battery capacity (unit: Wh).

<Measurement of thermal shrinkage rate>

Each separator was attached to the thermomechanical analyzer (SIINT, TMA/SS6100) in a tension mode with a load of 1 g. The temperature was increased from 20°C to 230°C at a heating rate of 5°C/min. The area of the separator at 100°C and the area of the separator at 150°C were measured. The thermal shrinkage rate of the separator at 100°C or 150°C was calculated by 100 x [(the area of the separator before the test) - (the area of the separator at 100°C or 150°C)]/(the area of the separator before the test).

<Nail penetration test>

The battery was charged with a constant voltage and a constant current of 0.2 C until the SOC became 100% (4.2 V). To the charged battery, a nail of SUS303 ($\varphi$3 mm) with an edge angle of 20° was penetrated at a speed of 10 mm/s. Table 1 shows "fire" in the occurrence of fire, "smoke" in the occurrence of smoke, and "no change" if neither fire nor smoke came out.

[Table 1]

| | Separator | | | | Thermal shrinkage rate at 100°C (%) | Thermal shrinkage rate at 150°C (%) | Nail penetration test |
|---|---|---|---|---|---|---|---|
| | Resin layer | Thickness of resin layer ($\mu$m) | Ceramic layer | Thickness of ceramic layer ($\mu$m) | | | |
| Example 1 | PP/PE/PP | 18 | Alumin a | 4 | 0 | 7 | No change |
| Example 2 | PP/PE/PP | 18 | Boehmi te | 4 | 0 | 3 | No change |
| Comparative Example 1 | pp | 25 | None | 0 | 3 | 40 | Smoke |
| Comparative Example 2 | PP/PE/PP | 18 | None | 0 | 3 | 35 | Smoke |

In the battery including the separator (Comparative Examples 1, 2) with a thermal shrinkage rate of more than 10% at 150°C obtained by TMA, the smoke was observed in the nail penetration test. In the battery including the separator according to Comparative Examples 1 and 2, penetrating the nail in the charged state causes the short-circuiting, which results in the electric conduction between the positive electrode and the negative electrode. Thus, the heat was generated from the battery. On this occasion, the separator is shrunk to make the positive electrode and the negative electrode be in direct contact with each other, in which case the area increases further. It is considered that this is why the heat is generated more. On the other hand, in the battery including the separator according to the present embodiment (Examples 1, 2) with a thermal shrinkage rate of 10% or less at 150°C obtained by TMA, the smoke was not observed in the nail penetration test.

Examples of the present embodiment have been described so far but these are just examples of the present embodiment. These are not intended to limit the technical scope of the present embodiment to the particular embodiment or the specific structure.

The lithium ion secondary battery according to the present disclosure may be any of the following first to sixth lithium ion secondary batteries.

The first lithium ion secondary battery includes a package and a power generating element disposed in the package, the power generating element including a positive electrode, a negative electrode, a separator, and an electrolyte solution, in which the separator has a shrinkage rate of 10% or less at 150°C obtained by a thermomechanical analysis.

The second lithium ion secondary battery is the first lithium ion secondary battery, in which the separator includes a heat-resistant layer.

The third lithium ion secondary battery is the second lithium ion secondary battery, in which the heat-resistant layer includes particles of metal oxide.

The fourth lithium ion secondary battery is the second lithium ion secondary battery, in which the heat-resistant layer contains alumina, boehmite, or a mixture thereof.

The fifth lithium ion secondary battery is the first lithium ion secondary battery, in which the positive electrode active material layer contains lithium nickel cobalt manganese composite oxide with a layered crystal structure represented by general formula of $Li_xNi_yCo_zMn_{(1-y-z)}O_2$.

The sixth lithium ion secondary battery is the first lithium ion secondary battery, in which the positive electrode and the negative electrode have an area of 75 2 cm or more.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1.  A lithium ion secondary battery comprising:

    a package; and
    a power generating element disposed in the package, the power generating element including:

       a positive electrode;
       a negative electrode;
       a separator; and
       an electrolyte solution, wherein the separator has a shrinkage rate of 10% or less at 150°C obtained by a thermomechanical analysis.

2.  The lithium ion secondary battery according to claim 1, wherein the separator includes a heat-resistant layer.

3.  The lithium ion secondary battery according to claim 2, wherein the heat-resistant layer includes particles of metal oxide.

4.  The lithium ion secondary battery according to claim 2, wherein the heat-resistant layer contains alumina, boehmite, or a mixture thereof.

5.  The lithium ion secondary battery according to any one of claims 1 to 4, wherein the positive electrode active material layer contains lithium nickel cobalt manganese composite oxide with a layered crystal structure represented by a general formula of $Li_xNi_yCo_zMn_{(1-y-z)}O_2$.

6.  The lithium ion secondary battery according to any one of claims 1 to 5, wherein the positive electrode and the negative electrode have an area of 75 cm$^2$ or more.

## FIGURE

10

19

12  15  17  13  11

31

11

12

25

21

29

27

29

11  15  12  15  17  13  11  13

EP 3 249 734 A1

Europäisches
Patentamt

European
Patent Office

Office européen
des brevets

# EUROPEAN SEARCH REPORT

Application Number

EP 17 17 2378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/052987 A1 (KATAYAMA HIDEAKI [JP] ET AL) 3 March 2011 (2011-03-03)<br>* abstract; figure 2 *<br>* paragraph [0024] *<br>* paragraph [0082]; figure 1b *<br>* paragraph [0077] *<br>* paragraph [0040] - paragraph [0046] *<br>* paragraph [0104] *<br>* paragraph [0118] - paragraph [0119] *<br>* paragraph [0034] *<br>* paragraph [0035] *<br>* paragraph [0089] - paragraph [0101] *<br>----- | 1-6 | INV.<br>H01M10/0525<br>H01M4/131<br>H01M2/14<br>H01M2/16<br>H01M10/42 |
| A | EP 2 124 271 A1 (TEIJIN LTD [JP]) 25 November 2009 (2009-11-25)<br>* paragraph [0018] *<br>* paragraph [0040] - paragraph [0041] *<br>----- | 1-6 | |
| A | WO 2015/159145 A1 (TOYOTA MOTOR CO LTD [JP]) 22 October 2015 (2015-10-22)<br>* paragraph [0050] *<br>----- | 1-6 | TECHNICAL FIELDS SEARCHED (IPC) |
| A | WO 2015/105369 A1 (LG CHEMICAL LTD [KR]) 16 July 2015 (2015-07-16)<br>* paragraph [0019] *<br>* paragraph [0034] - paragraph [0040] *<br>----- | 1-6 | H01M |

The present search report has been drawn up for all claims

| Place of search | Date of completion of the search | Examiner |
|---|---|---|
| Munich | 29 June 2017 | Tylus, Urszula |

EPO FORM 1503 03.82 (P04C01)

## ANNEX TO THE EUROPEAN SEARCH REPORT
## ON EUROPEAN PATENT APPLICATION NO.

EP 17 17 2378

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2017

| Patent document cited in search report | | | Publication date | Patent family member(s) | | | Publication date |
|---|---|---|---|---|---|---|---|
| US 2011052987 | A1 | | 03-03-2011 | CN | 101796668 | A | 04-08-2010 |
| | | | | JP | 5144651 | B2 | 13-02-2013 |
| | | | | JP | WO2009044741 | A1 | 10-02-2011 |
| | | | | KR | 20100051710 | A | 17-05-2010 |
| | | | | US | 2011052987 | A1 | 03-03-2011 |
| | | | | WO | 2009044741 | A1 | 09-04-2009 |
| EP 2124271 | A1 | | 25-11-2009 | CN | 101558513 | A | 14-10-2009 |
| | | | | CN | 102097609 | A | 15-06-2011 |
| | | | | EP | 2124271 | A1 | 25-11-2009 |
| | | | | EP | 2575196 | A1 | 03-04-2013 |
| | | | | JP | 4243323 | B2 | 25-03-2009 |
| | | | | JP | 4303307 | B2 | 29-07-2009 |
| | | | | JP | 4465017 | B2 | 19-05-2010 |
| | | | | JP | 2008300362 | A | 11-12-2008 |
| | | | | JP | 2009021265 | A | 29-01-2009 |
| | | | | JP | WO2008062727 | A1 | 04-03-2010 |
| | | | | KR | 20090091160 | A | 26-08-2009 |
| | | | | KR | 20100049696 | A | 12-05-2010 |
| | | | | KR | 20100049697 | A | 12-05-2010 |
| | | | | TW | 200840118 | A | 01-10-2008 |
| | | | | TW | 201042796 | A | 01-12-2010 |
| | | | | TW | 201042797 | A | 01-12-2010 |
| | | | | US | 2010068612 | A1 | 18-03-2010 |
| | | | | US | 2011165450 | A1 | 07-07-2011 |
| | | | | US | 2011165469 | A1 | 07-07-2011 |
| | | | | WO | 2008062727 | A1 | 29-05-2008 |
| WO 2015159145 | A1 | | 22-10-2015 | CN | 106233498 | A | 14-12-2016 |
| | | | | JP | 2015207419 | A | 19-11-2015 |
| | | | | KR | 20160134808 | A | 23-11-2016 |
| | | | | US | 2017047569 | A1 | 16-02-2017 |
| | | | | WO | 2015159145 | A1 | 22-10-2015 |
| WO 2015105369 | A1 | | 16-07-2015 | CN | 105849963 | A | 10-08-2016 |
| | | | | EP | 3070776 | A1 | 21-09-2016 |
| | | | | JP | 2017500708 | A | 05-01-2017 |
| | | | | US | 2016322618 | A1 | 03-11-2016 |
| | | | | WO | 2015105369 | A1 | 16-07-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016102477 A
- JP 2013035293 A
- WO 200772596 A
- JP 2014022051 A